# EUROPEAN PATENT SPECIFICATION

(11) **EP 2 003 962 B1**
(45) Date of publication and mention of the grant of the patent: **29.07.2009**
(21) Application number: 07711265.4
(22) Date of filing: 14.03.2007
(51) Int. Cl.: A01M 29/00, A01M 29/02, A01M 31/00

(54) **APPARATUS AND METHOD FOR PREVENTING INJURY ON WILDLIFE**
VORRICHTUNG UND VERFAHREN ZUR VERHINDERUNG VON VERLETZUNGEN VON WILDTIEREN
APPAREIL ET PROCÉDÉ DESTINÉ À EMPÊCHER DES DÉGATS SUR LA FAUNE SAUVAGE

(30) Priority: 14.03.2006 DK 200600359
(43) Date of publication of application: 24.12.2008
(73) Proprietor: Anico ApS, 8581 Nimtofte (DK)
(72) Inventor: HANSEN, Mogens, Rosengaard, 8581 Nimtofte (DK)
(74) Representative: Gregersen, Niels Henrik
(86) International application number: PCT/DK2007/000122
(87) International publication number: WO 2007/104310

(56) References cited:
- US-A- 5 602 523
- US-A1- 2005 158 352

## Description

### Field of the Invention

The present invention concerns an apparatus for detecting and averting wildlife, see e.g. US-A-2005/0158352, where the apparatus may contain means for detecting wildlife and means for emitting stimuli,
where the apparatus may contain means for emitting varying stimuli as variants of at least one basic stimulus.

The present invention also concerns a method for preventing injury on wildlife, including exerting stimuli depending on at least one control parameter, where the stimuli may include at least one stimulus selected among the following groups of basic stimuli: sound, light, movement and scent.

The present invention also concerns use of an apparatus and a method as specified above for preventing injury on wildlife and reducing conflicts between animals and humans.

### Description of Prior Art

US 5,602,523 describes an animal averting system, particularly for roe deer, where the system generates a square output signal in the ultrasonic frequency range, and which has piezo-electric actuator used in a horn loudspeaker which forms harmonic frequency deviations, so that at any time the fundamental frequency and harmonic deviation are found in the acoustic signal. The specified system has the option of shifting between at least 10 different frequencies.

We are here speaking of a system only operating with emitting acoustic stimuli in the ultrasonic range. This means in a frequency range located above the frequency range audible for humans but within a frequency range audible for most animal species. The patent document does not mention transmission of other types of stimuli than the indicated ultrasonic stimuli.

The German utility model application DE 200103835 U1 describes a deterrent device for protecting objects against approaching animals. The deterrent device operates with means for optical detection of animals that are frightened by the transmission of acoustic signals. The detection itself occurs either by means of a PIR-sensor or by means of a light fence consisting of a laser and associated detecting means. The deterrent device contains a memory containing different new combinations that may be transmitted through loudspeakers.

It is a compound apparatus where detecting and acoustic sound emission, respectively, occurs from one and the same compound apparatus. The apparatus contains a register with a number of stimuli where the apparatus can choose between these stimuli. It is also possible in the apparatus to replace a module containing stimuli, so that the apparatus can be reprogrammed for new stimuli. One object of the invention is to substantially reduce damage caused by wildlife on agricultural crops.

A second object may be to substantially reduce wildlife damage on afforestation in woods.

A third object may be to reduce the number of traffic accidents caused by wildlife and to reduce the number of injuries and damages on wildlife, cars and people due to collisions.

A fourth object may be to prevent damage from martens in buildings.

A fifth object may be to protect wildlife release sites from attacks from predators and birds of prey.

A sixth object may be to protect playgrounds against excrements from cats and foxes.

### Description of the Invention

This may be achieved if an apparatus as specified in the introduction is improved so that the apparatus contains at least one memory, where the memory may contain various basic stimuli, where the memory may contain a plurality of variable stimuli within the various basic stimuli, where the apparatus may contain means for selecting basic and variable stimuli, where the apparatus may contain means for emitting selected stimuli.

Hereby may be achieved that a combination of various stimuli may be exerted or emitted within light, sound, movement or scent. Within all types of stimuli, stimuli which are not perceived by the human senses may be applied. Both infrasound and ultrasound may thus be used. Also, light which is not visible to humans may be applied. With regard to scent, there may also be used scents which cannot be perceived by humans. Advantageously, an apparatus may be designed so that a combination of stimuli is selected depending on the actual time of the day. At the same time, the system is adapted so that within the four tentatively defined basis stimuli, a very large number of variants are found which soundwise may include a number of very different sound recordings that may be stored in an electronic memory, so that widely different sounds are played, maybe controlled by the time of day, but maybe also controlled by a principle of random selection. Correspondingly, in connection with light there may be a large number of various light signals that may vary in colour. Light may also be turned so that a light beam will sweep through the landscape, or there may be used a flashlight for giving off strong brief flashes. By modifying light in connection with a light source, there may be incorporated a movement in the light beam in a way that a movement seems to occur on the spot where the light falls. These light signals may advantageously be used when it is dark, and the emission may thus also occur randomly so that repetition of light signals will occur very rarely.

With regard to scent, also a plurality of different scents may be given off, e.g. predator scents which particularly has the effect of deterring the animals wanted to be removed from an area.

Also, by movement in the form of various patterns of movement in the shape of e.g. arms that may be lifted and lowered, or items that may rotate, one may produce a movement, possibly in combination with light or with other basic stimuli so that this has great effect. Also within movement there may be a number of variables that may be performed.

By combining basic stimuli with a large number of stimuli variants, it will be very infrequent that the same combination of stimuli will be used. Thereby is avoided that animals become used to a certain stimulus, as emission of stimuli after their getting used to them is less effective.

The apparatus may advantageously select stimuli on the basis of an actual point of time where the apparatus may contain a random generator for selecting groups of stimuli and variables. Hereby may be achieved that a superior control of which stimuli are to be used is effected on the basis of the actual time of the day, while selection of variables of stimuli occurs on the basis of a random generator, so that it is very difficult to predict which combinations of stimuli are used by activation.

The apparatus may interact with infrared optical means for detecting wildlife. Hereby may be achieved that a well-known infrared sensor, possibly in combination with several sensors, may indicate the presence of wildlife within a locality. An independently operating apparatus may hereby be constructed, which e.g. may be placed in a natural clearing in a wood, where self-germination of seeds from trees is allowed, so that in a proximal area around the apparatus, maybe extending 30-50 metres from the position of the apparatus, self-germination of self-sown seeds from trees will be provided reasonably good growth conditions, with less predation on seedlings and trees without disturbing the animals in the locality except when they go into the new growth area.

The apparatus may advantageously interact with means for emitting and detecting at least one light beam for detecting wildlife. Hereby it may be achieved that a light fence may be formed, possibly consisting of several light beams, and where light beams, maybe by means of mirrors, are deflected around corners there may be obtained barring of a stretch of maybe several hundred metres or more by means of a single set of detectors. The apparatuses for emitting or exerting stimuli, either via remote control, radio-based or by a cable connection, are provided at quite different positions than the detectors for emitting stimuli, so that wildlife is forced away from the area to be protected. It may hereby possibly be avoided that wildlife in large flocks go out on fields and do great damage on crops there. Also, by means of the electronic wildlife fence it may be achieved that wildlife is retained in wooded areas and abstain from crossing roads in order thereby to reduce the number of accidents between cars and animals.

The method specified in the introduction may advantageously be improved, whereby the method may select at least one basic stimulus, that the method subsequently may select at least one stimulus variable within at least one basic stimulus; where the method may select basic stimuli on the basis of actual time.

Hereby may be achieved that the method provides for selecting a basic stimulus within groups of stimuli, and that this selecting occurs on the basis of the actual time of the day, so that the combination of stimuli having the greatest effect at the actual time and species of wildlife is selected on the basis of whether it is light or dark, or on the basis of empirical observations of wildlife. Having selected basic stimuli, the method will select a stimulus variant within groups of basic stimuli by a random generator. It is hereby ensured that various stimuli are selected so that repetition of the same stimuli becomes very improbable, whereby adaptation on the part of the wildlife to the applied stimulus is not obtained.

Use of the invention as specified in the introduction may advantageously be performed so that along a woodline a wildlife feeding zone is laid out, where on an adjacent field detectors may be used for indicating wildlife, where detection of wildlife may entail selection and transmission of a combination of basic stimuli and variables of stimuli.

Hereby may be achieved a good interaction between a stock of game in a wood and an adjacent plot owner, where a large stock of game may be in the interest of the wood while the interest of the neighbour is to reduce the number of wildlife damages on field crops the most. On the part of the neighbour raising the crops there may also be some interest in hunting the wildlife that seek the fields. By establishing a definite feeding zone between field and wood, it may be achieved that the animals are concentrated in the feeding zone where it may be chosen to feed with beets or other natural crops preferred by the wildlife, while with e.g. maize on a field behind, which is also a preferred feed source for deer, then stimuli will be emitted when the wildlife moves from the feeding zone along the woodline and into the adjacent field. Feeding zones may possibly be formed in that special crops are grown in the feeding zone which is intended for the wildlife. Thereby may be achieved an increased stock of game, and by using the invention it may be attained that damage on crops on fields adjoining the feeding zone will be much reduced.

In addition, the invention concerns at least one apparatus which is set up in an afforestation for detecting wildlife and emitting a combination of basic stimuli and variable stimuli. Hereby may be achieved that an afforestation is protected against wildlife damage, e.g. by setting up a single apparatus in the middle of an afforestation. The damage will hereby be reduced in the area around the apparatus. By using an alternative variant of the invention, an area may be fenced in by means of a fence consisting of one or more light rays, where stimuli are released each time the light rays are interrupted. A fencing in of afforestations may hereby be effected, even of large areas, because the number of light rays may be increased to a large number for fencing larger areas, so that the erection of traditional fences around afforestations is entirely avoided. By applying the invention, there may thus be achieved a wildlife fence which is not 100% secure against animals forcing their way through, since fleeing wildlife is not stopped, but the number of animals will be much reduced so that damage on afforestations will be considerably reduced.

The invention furthermore includes using at least one apparatus and a method which may advantageously be used along a road/passage through a wood, where detection of wildlife occurs by means for emitting at least one light beam, where means for detecting light beams may communicate with at least one apparatus for exerting/emitting a combination of basic stimuli and stimuli variables. Hereby may be achieved that the number of road accidents, where wildlife is hit by cars, is considerably reduced to the advantage of the wildlife, but also in that the damage on cars and injuries on persons are highly reduced. Application of the apparatus will mean that as soon as animals interrupt the light rays, which may possibly be disposed withdrawn in relation to a road, stimuli will be transmitted, possibly from an area lying behind the light beams, so that the animals are frightened into moving the opposite way, thus preventing the animals' passage of e.g. a road. On roads with very little traffic, the system may be combined with detector systems for indicating if there is any traffic on the roads or not. For example, on stretches where there are wildlife tracks crossing a road, one may close the wildlife track each time it is indicated that cars are on their way through the wood, but at some times, e.g. very early in the morning where the wildlife is most active and no cars are on the road, no stimuli are transmitted or exerted, and the wildlife passage of the roads is free.

The invention also concerns use of the apparatus and the method in buildings for detecting and averting martens, where an apparatus may communicate with optical means for detecting martens, where in case of detecting martens, the apparatus exerts or emits a combination of basic stimuli and stimuli variables, where the apparatus may contain communication means which are activated at the detecting of martens in a building. Hereby may be achieved that one or more apparatuses can be placed in a building, and giving off stimuli will frighten a marten if it comes into the building. However, indication of marten will mean at the same time that in many cases it is desired to remove the marten, and therefore it is an advantage if the apparatus is combined with e.g. transmission of an electronic signal, possibly in the form of a signal through the cellular phone network indicating that a marten has been detected and that stimuli have been emitted. After that, a wildlife management or wildlife officer may go to the address from where the signal has been transmitted and set up marten traps.

### Short Description of the Drawing

The invention is described in more detail with reference to the drawing, where:
- Fig. 1: shows a possible embodiment of an apparatus according to the invention;
- Fig. 2: shows a possible alternative embodiment in which PIR detectors are used;
- Fig. 3: shows a possible embodiment of the invention by means of light rays;
- Fig. 4: shows a possible use of the invention;
- Fig. 5: shows a second alternative use of the invention;
- Fig. 6: shows a third alternative use of the invention;
- Fig. 7: shows a fourth alternative use of the invention; and
- Fig. 8: shows a curve pattern for indicating the effect of the invention.

### Detailed Description of the Invention

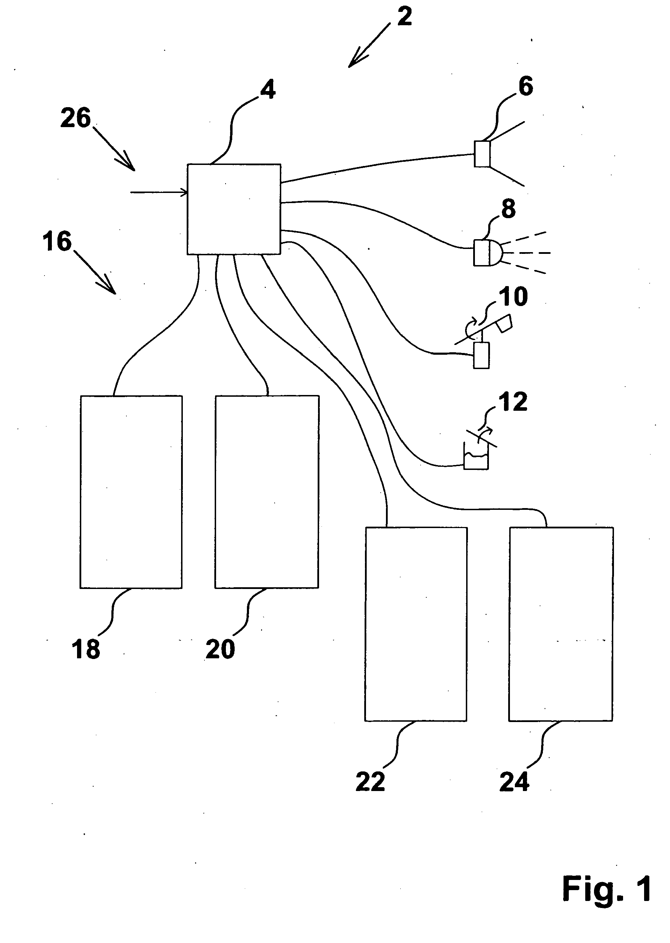

Fig. 1 shows a possible embodiment of an apparatus 2 according to the invention. The apparatus 2 contains a central processor unit 4 that communicates with means 6, 8, 10, 12 for emitting or exerting stimuli, where 6 is sound stimuli, 8 is light stimuli, 10 is movement stimuli and where 12 is scent stimuli. The processor unit 4 also communicates with a memory 16 containing groups of basic stimuli 18 for emitting sound stimuli, basic stimuli 20 for emitting light, basic stimuli 22 for exerting movement and basic stimuli 24 for emitting scent. The processor unit 4 also communicates with an input line 26 that e.g. may be used for controlling the release of stimuli. The processor unit may also be connected with the internet, either by cable or by a wireless connection which e.g. can be effected by means of a cellular telephone. The processor may hereby be monitored and the number of detected signals may be transferred. At the same time, the selection of stimuli may be changed so that a positive experience of combination of stimuli may be programmed by means of the network connection. Processor and associated program may be designed so that the apparatus is examining by itself which combinations of stimuli that are most effective, and selects by itself the most efficient stimuli combinations.

Each of the individual blocks 18, 20, 22, 24 contains variables within the same basic type of stimuli. This means e.g. basic stimulus 18, which contains sounds, may contain a very large number of different sound sequences. Sound sequences may include shouting humans, barking dogs, wolves' howling sound of lynx, sounds of hunting predators such as lions, sounds of running cars, may be sounds of laughing humans, it may be sounds of horses galloping through woods. All in all, there are a great amount of various sounds that may be applied. At the same time, in an apparatus 4 it will be possible to perform a change of the frequency content in the actual sounds registered, so that the individual sounds released are not the same from time to time. Also, within the release of light there may be different groups of light that can be activated. Here it is envisaged that a lamp may e.g. flash at widely different rates. Flashlight may be used, i.e. very rapid discharge of strong light. Also, a light beam may be swung, thereby performing a sweep across an area as an alternative. It will also be possible with optical elements to perform a change in colour, and at the same time one may perform a movement within a light beam so that the spot caught by the light appears to be moving. Within the main group of moving stimuli 22, depending on the actual design of actuators for exerting movement as the one illustrated by the reference 10, a large number of variants are also found. Like in the case of stimuli of scents 24 there may be provided different combinations of scents which by the differing combinations may have different effect and most often a very favourable effect as to deterring animals for a longer period of time.

By using an apparatus 2, depending on the control signals received through the connecting line 26 there may be released widely different stimuli in dependence on the time of the day in a way where the same stimuli are only repeated at very long intervals. Thereby is avoided adaptation for the animals that one wants to protect oneself against.

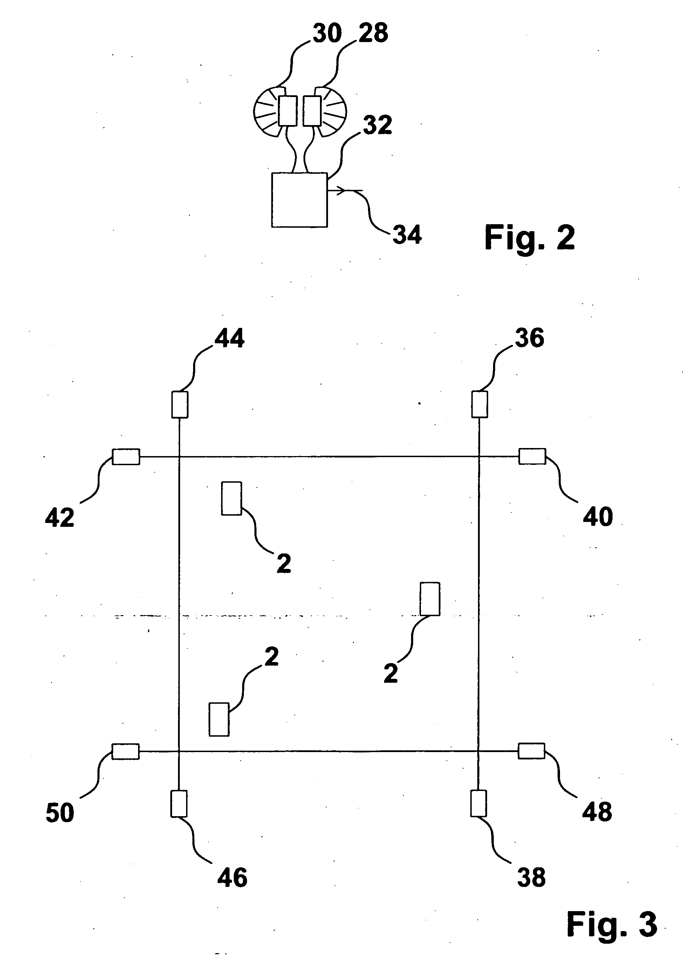

Fig. 2 shows a possible embodiment of the invention where infrared PIR sensors 28, 30 communicate with a control unit 32 which via a connecting line 34 may communicate with the input line 26 indicated on Fig. 1, so that stimuli may be released, as previously described, if one of the PIR sensors 28, 30 detects a change in the infrared radiation level within a locality.

Hereby may be attained an automatic apparatus, as the unit 32 and the apparatus 2 may be constructed in connection with each other. I will hereby be possible to make an apparatus, e.g. in the form of at stand that can operate automatically within a limited area, as the PIR sensors 28, 30 have, limited range. However, more sensors 28, 30 that are connected to apparatuses 2 may be set up so that even greater areas may be protected against wildlife damage by using this technique.

Fig. 3 shows a possible alternative embodiment of the invention, as a number of light emitting apparatuses and light receiving apparatuses, or combinations of these 36-50, form a sealed-off area within which there are a number of apparatuses 2 for giving off stimuli so that possibly intruding animals are quickly deterred from the encircled area.

Thus e.g. an afforestation of christmas trees may be fenced in by means of an electronic fence so that the number of damages in the form of premorse top shoots in the afforestation is very much reduced. As red deer or roe deer are primarily making damage on afforestations in the spring time, where there is a strong growth in the new shoots, a system as indicated on Fig. 3 may advantageously be used only in these few months of the year where both roe deer and red deer search for food in the afforestation, while in the rest of the year where there is an abundance of food for the animals, they only do very limited damage to the afforestations.

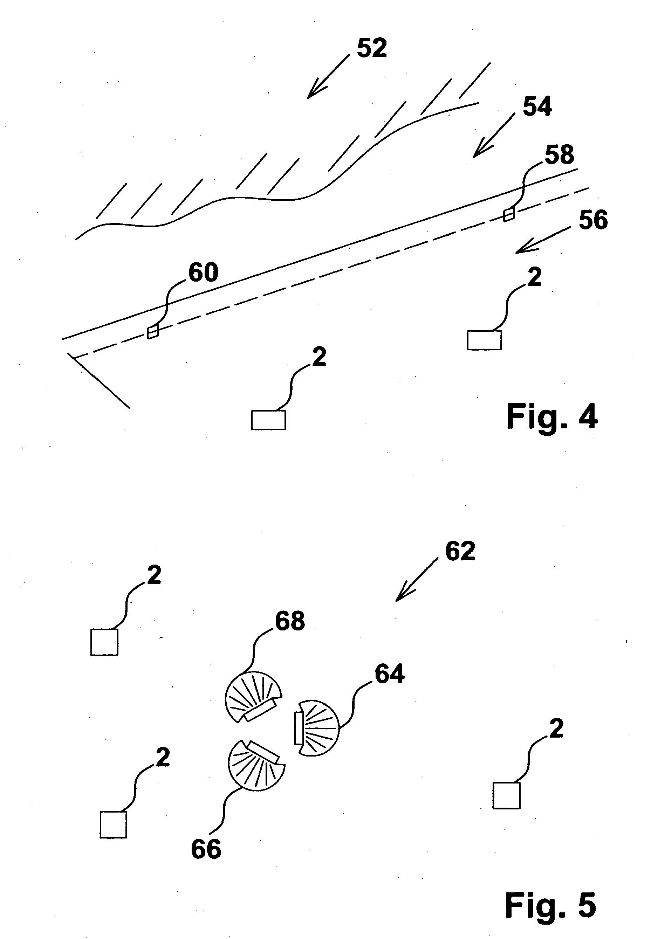

Fig. 4 shows a possible application of the invention where in a woodline 52 adjacent to a field 56, there is established a feeding zone 54, where detectors 58, 60 are set up on the field 56 immediately at the edge of the feeding zone 54, the detectors indicating intruding animals by means of light rays. Apparatuses 2 for emitting stimuli are also shown.

Animals from the woodline 52 may thus freely move out into the feeding zone 54
where feeding may e.g. be performed by means of beets or other wildlife-friendly sources of feed. Crops may be planted in the feeding zone 54 with the clear purpose of attracting red deer. As feed is accessible in the feeding zone 54, the animals may possibly only be attracted to a lesser degree by crops on the field 56. However, if there are attractive crops, e.g. a beet field or a maize field, the animals may possibly prefer the field for the feeding zone 54. For that reason the detectors 58, 60 are provided, which in case the light rays is interrupted, stimuli will be released as previously described by the apparatuses 2 in order thereby to frighten the animals out of the field and back into the feeding zone 54 and possibly frighten the animals into the woodline 52.

Fig. 5 shows an alternative embodiment, e.g. for protecting self-germinating trees in a clearing in a wood where protection is desired within a limited area 62. Here is illustrated PIR sensors 64, 66, 68 which will detect a change in the infrared radiation within a locality extending from 30-50 metres from the sensors 64, 66, 68. If the sensors detect animals, stimuli are released from apparatuses 2 which are disposed spaced apart from the detectors 64, 66, 68. Communication between the units may either be effected through cable or it may be effected by means of radio.

The embodiment described in connection with Fig. 5 may alternatively be used for protecting playgrounds including sandboxes from excrements of cats and foxes. Each time the animals approach playgrounds in parks, stimuli are emitted. The emission may advantageously be active at times where the playgrounds are not used by children.

The invention may also be used for protecting wildlife release sites where pheasants, partridges and mallards are raised and have to learn to know the nature before they are released. The invention can prevent predators and birds of prey from doing any substantial damage to the released fowls.

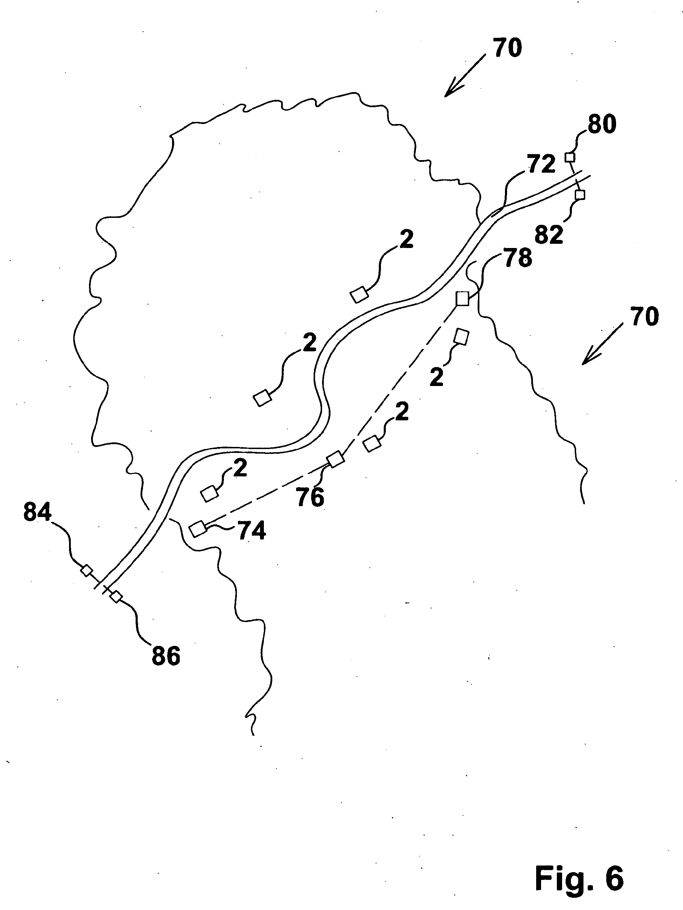

On Fig. 6, which illustrates an alternative application of the invention, a wood 70 is shown through which a road 72 is passing. At the animals' passing of the road 72 there is a risk of accidents since the animals are possibly hit by cars. Thereby great injury occurs on the animals, but also great damage may occur to the cars. Detectors 74, 76, 78 are shown on the Figure which is both acting as detectors and transmitters of light, and which e.g. communicate with wireless communication means with a number of apparatuses 2 for emitting stimuli. Detectors 80, 82, 84, 86 are also shown on the Figure which by means of light rays may detect cars on the road 72. Hereby it becomes possible to deactivate the emission of stimuli in a period of the day where there is no traffic on the roads. However, if the detectors 80, 82, 84, 86 indicate that a car is on its way into the wood, stimuli will immediately be emitted from the apparatuses 2 so that the animals are deterred, and as long as a car is present in the wood, the detectors 74, 76, 78 will be active so that if a light ray is interrupted, stimuli are emitted again from the apparatuses 2. At the same time, the invention may interact with active signs which may be actuated when animals are detected close to the road.

Hereby may be constructed a system that may substantially reduce the number of traffic injuries and damages on animals, cars and people.

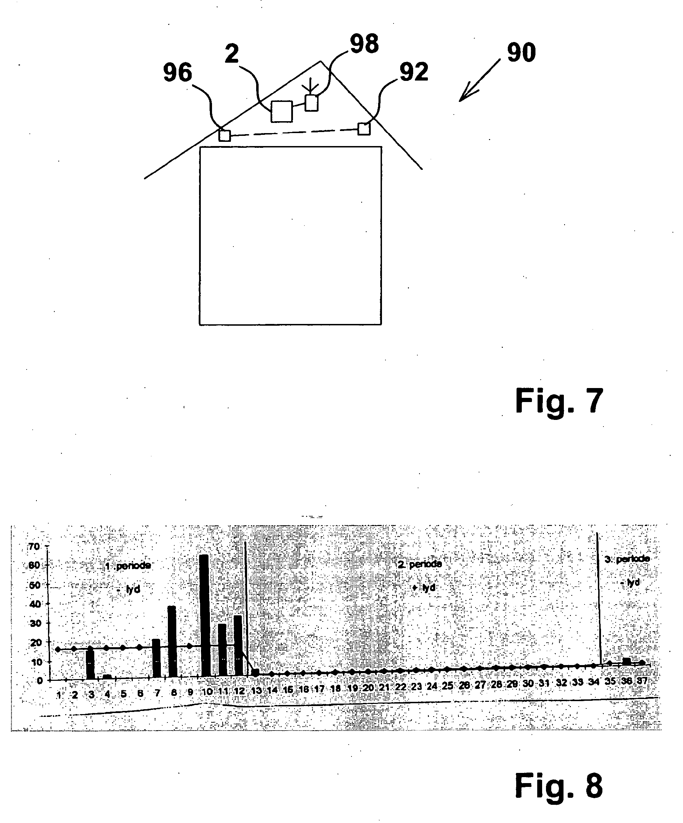

Fig. 7 shows an alternative embodiment of the invention, where an apparatus 2 is used in a building 90 in which means 92, 96 are set up for establishing a light ray or a PIR sensor which, if the ray is interrupted, activates the apparatus 2 which by activation. communicates with communication means 98, e.g. for automatic transmission of an SMS message saying that the light ray between transmitter and detector 92, 96 has been interrupted, indicating that a marten is present in the building 90. The SMS message may be transmitted to a wildlife officer which by the indication of martens in the building goes out and sets up traps for catching the roaming marten.

Fig. 8 shows a graphic image of the number of red deer registered in a given area each day for a period of about a month, where a first period of about 12 days is shown where the apparatuses 2 have been inactive, however, by means of light rays the number of animals having passed through an area has been detected, where it appears that the activity has been very great. In a subsequent period where the apparatuses 2 have been active so that stimuli are emitted, it may be seen that the number of red deer detected has dropped to almost no activity. While in a third period where the apparatuses 2 are deactivated, red deer activity appears immediately. This means that the application of the apparatuses 2 has very great effect, and the effect is seemingly such that in the period where the system is active, the red deer get up to and activate the apparatuses 2 and quickly turn back and keep completely away from the area in question, maybe for a longer period of time. However, if the animals' movements are not wanted to be prevented due to the time of the year, it appears that the animals become active within the area in question as soon as the system is not active.

Advantageously, the system may interact with a digital camera which may be used for automatic image recognition so that the animal species may be determined automatically, and the animal species may have influence on the selected stimuli.

The system may advantageously be designed as separate units where detection is effected by a type of apparatus that communicate either wirelessly or by means of cable with an apparatus for emitting stimuli. Advantageously, there may be provided several apparatuses for detecting which interact with one or more apparatuses for emitting stimuli.

The system may be constructed so that the system has a memory unit which is automatically registering combinations of stimuli and by means of detectors simultaneously detects which effect the applied stimuli have on the wildlife. Based on empirical material, the system can test new combinations of stimuli and test these on the wildlife which is detected. In this way, the individual system may build up an independent empirical database of stimulus combinations that have the greatest effect. Also, a system will be able to emit various combinations of stimuli in dependence of whether it is a single animal which is desired to be carefully led away, or if it is e.g. a large flock of roe deer simultaneously intruding into an area where e.g. crops are desired to be protected. In the latter situation, it may possibly be required to use considerably stronger stimuli in order to deter a large group.

The system may be coupled to the internet, which will typically occur by means of wireless communication means, maybe by the system having an integrated cellular phone for data transmission. From a central facility, one may hereby monitor the operating systems and read the stimuli combinations having the greatest effect. Also, from the central system one may program new stimuli combinations in facilities during operation. It may thereby be ensured very efficiently that the individual systems are operating optimally, because it is constantly supervised how many animals are detected and how many possibly are deterred. Remote supervision and remote programming means that one can avoid inspection of the facilities provided in the nature except at very long time intervals. Since the systems are often to operate as independent units without connection to power supply, it will be necessary to let these systems operate with batteries or the systems may be connected to solar cell systems so that a battery system is charged every time there is sufficient sun falling on the solar cells.

## Claims

1. Apparatus (2) for averting wildlife, where the apparatus (2) includes means for detecting and registering wildlife animals, where the apparatus is designed with means (6,8, 10,12) for exerting stimuli, where the apparatus (2) contains means for exerting varying stimuli as variants of at least one basic stimulus, the apparatus contains at least one memory (16), where the memory (16) contains different basic stimuli (18,20,22,24), where the memory (16) contains a plurality of variable stimuli within the various basic stimuli (18,20,22,24), where the apparatus (2) contains means for selecting basic (18,20,22,24) and variable stimuli, **characterized in that** the selection of basic (18,20,22,24) and variable stimuli occurs on the basis of previous registrations of wildlife and registrations of applied stimuli, where the apparatus (2) contains means (6,8,10,12) for emitting selected stimuli.

2. Apparatus according to claim 1, **characterised in that** the apparatus (2) selects stimuli on the basis of actual time, where the apparatus (2) contains a random generator for selecting basic stimuli (18,20,22,24) and variable stimuli.

3. Apparatus according to claim 1 or 2, **characterised in that** the apparatus interacts with infrared optical means (28,30,64,66,68) for detecting wildlife.

4. Apparatus according one of claims 1-3, **characterised in that** the apparatus interacts with means (36, 38, 40, 42, 44, 46, 48, 50, 58, 60, 74, 76, 78) for emitting and detecting at least one light beam for detecting wildlife.

5. A method for preventing injury on wildlife as specified in claims 1-4, including exerting stimuli depending on at least one control parameter, where the stimuli include at least one stimulus selected among the following, groups of basic stimuli: sound (6), light (8), movement (10), scent (12), the method includes detecting and registering wildlife, where the method selects at least one basic stimulus (18,20,22,24), the method subsequently selects at least one stimulus variable within at least one basic stimulus (18,20,22,24), **characterized in that** the method concerns selecting basic stimulus and stimuli variables on the basis of previous registrations of wildlife and applied stimuli.

6. Use of an apparatus as specified in claims 1 - 4 and a method as specified in claim 5 for preventing injury on wildlife, **characterised in that** along a woodline (52) a wildlife feeding zone (54) is laid out, where on a field (56) lying behind it detectors (58,60) are used for indicating wildlife, where detection of wildlife entails selection and emitting a combination of basic stimuli (18,20,22,24) and stimuli variables.

7. Use of an apparatus as specified in claims 1 - 4 and a method as specified in claim 5 for preventing injury on wildlife according to claim 6, **characterised in that** at least one apparatus (2) is set up in an afforestation for detecting wildlife and emitting a combination of basic stimuli (18,20,22,24) and stimuli variables.

8. Use of an apparatus as specified in claims 1 - 4 and a method as specified in claim 5 for preventing injury on wildlife according to claim 6 or 7, **characterised in that** at least one apparatus (2) is set up along a road/passage (72) through a wood, where detection of wildlife occurs by means (74, 76, 78) for emitting at least one light beam, where means (74, 76, 78) for detecting light beams communicates with at least one apparatus (2) for exerting/emitting a combination of basic stimuli (18, 20, 22, 24) and stimuli variables.

9. Use of an apparatus-as specified in claims 1 - 4 and a method as specified in claim 5 for preventing injury on wildlife according to one of claims 6 - 8, **characterised in that** the apparatus (2) is used in buildings for detecting and averting birds and mammals, where the apparatus (2) communicates with optical means (92, 96) for detecting birds and mammals, where the apparatus by detecting birds or mammals exert or transmit a combination of basic stimuli (18, 20, 22, 24) and stimuli variables,
where the apparatus contains communication means (98) which are activated by detecting birds or mammals in a building.

## Patentansprüche

1. Vorrichtung (2) zum Abwehren wildlebender Tiere, wobei die Vorrichtung (2) Mittel umfasst, um wildlebende Tiere zu erfassen und zu registrieren, die Vorrichtung versehen ist mit Mitteln (6, 8, 10, 12) zum Ausgeben von Reizen, die Vorrichtung (2) Mittel enthält, um sich verändernde Reize als Varianten wenigstens eines Basisreizes auszugeben, die Vorrichtung wenigstens einen Speicher (16) enthält, die Vorrichtung (16) verschiedene Basisreize (18, 20, 22, 24) enthält, der Speicher (16) mehrere veränderliche Reize innerhalb der verschiedenen Basisreize (18, 20, 22, 24) enthält und die Vorrichtung (2) Mittel enthält, um Basisreize (18, 20, 22, 24) und veränderliche Reize auszuwählen, **dadurch gekennzeichnet, dass** die Auswahl der Basisreize (18, 20, 22, 24) und der veränderlichen Reize auf der Grundlage von vorhergehenden Registrierungen wildlebender Tiere und von Registrierungen angewendeter Reize erfolgt, wobei die Vorrichtung (2) Mittel (6, 8, 10, 12) zum Aussenden ausgewählter Reize enthält.

2. Vorrichtung nach Anspruch 1, **dadurch gekennzeichnet, dass** die Vorrichtung (2) Reize auf der Grundlage der aktuellen Zeit auswählt, wobei die Vorrichtung (2) einen Zufallsgenerator enthält, um Basisreize (18, 20, 22, 24) und veränderliche Reize auszuwählen.

3. Vorrichtung nach Anspruch 1 oder 2, **dadurch gekennzeichnet, dass** die Vorrichtung mit Infrarotlichtmitteln (28, 30, 64, 66, 68) in Wechselwirkung steht, um wildlebende Tiere zu erfassen.

4. Vorrichtung nach einem der Ansprüche 1-3, **dadurch gekennzeichnet, dass** die Vorrichtung mit Mitteln (36, 38, 40, 42, 44, 46, 48, 50, 58, 60, 74, 76, 78) in Wechselwirkung steht, um wenigstens einen Lichtstrahl auszusenden und zu erfassen, um wildlebende Tiere zu erfassen.

5. Verfahren zum Verhindern von Verletzungen an wildlebenden Tieren nach den Ansprüchen 1-4, das das Ausgeben von Reizen in Abhängigkeit von wenigstens einem Steuerparameter umfasst, wobei die Reize wenigstens einen Reiz enthalten, der aus den folgenden Gruppen von Basisreizen ausgewählt ist: Schall (6), Licht (8), Bewegung (10) und Duftstoff (12), wobei das Verfahren das Erfassen und Registrieren wildlebender Tiere umfasst, das Verfahren wenigstens einen Basisreiz (18, 20, 22, 24) auswählt und das Verfahren anschließend wenigstens einen Reiz auswählt, der innerhalb wenigstens eines Basisreizes (18, 20, 22, 24) veränderlich ist, **dadurch gekennzeichnet, dass** das Verfahren das Auswählen eines Basisreizes und veränderlicher Reize auf der Grundlage früherer Registrierungen von wildlebenden Tieren und von angewendeten Reizen betrifft.

6. Verwendung einer Vorrichtung nach den Ansprüchen 1-4 und eines Verfahrens nach Anspruch 5, um Verletzungen an wildlebenden Tieren zu verhindern, **dadurch gekennzeichnet, dass** längs einer Waldlinie (52) eine Zone (54) zum Füttern wildlebender Tiere ausgelegt wird, wobei in einem dahinter liegenden Feld (56) Detektoren (58, 60) verwendet werden, um wildlebende Tiere anzuzeigen, wobei die Erfassung wildlebender Tiere die Auswahl und das Aussenden einer Kombination aus Basisreizen (18, 20, 22, 24) und aus veränderlichen Reizen zur Folge hat.

7. Verwendung einer Vorrichtung nach den Ansprüchen 1-4 und eines Verfahrens nach Anspruch 5, um Verletzungen an wildlebenden Tieren zu verhindern, nach Anspruch, 6, **dadurch gekennzeichnet, dass** wenigstens eine Vorrichtung (2) in einer Aufforstung aufgestellt wird, um wildlebende Tiere zu erfassen und um eine Kombination aus Basisreizen (18, 20, 22, 24) und aus veränderlichen Reizen auszusenden.

8. Verwendung einer Vorrichtung nach den Ansprüchen 1-4 und eines Verfahrens nach Anspruch 5, um Verletzungen an wildlebenden Tieren zu verhindern, nach den Ansprüchen 6 oder 7, **dadurch gekennzeichnet, dass** wenigstens eines Vorrichtung (2) längs einer Straße/eines Durchgangs (72) durch einen Wald aufgestellt wird, wobei die Erfassung wildlebender Tiere durch Mittel (74, 76, 78) zum Aussenden wenigstens eines Lichtstrahls erfolgt, wobei Mittel (74, 76, 78) zum Erfassen von Lichtstrahlen mit wenigstens einer Vorrichtung (2) zum Ausgeben/Aussenden einer Kombination aus Basisreizen (18, 20, 22, 24) und aus veränderlichen Reizen kommunizieren.

9. Verwendung einer Vorrichtung nach den Ansprüchen 1-4 und eines Verfahrens nach Anspruch 5, um Verletzungen an wildlebenden Tieren zu verhindern, nach einem der Ansprüche 6-8, **dadurch gekennzeichnet, dass** die Vorrichtung (2) in Gebäuden verwendet wird, um Vögel und Säugetiere zu erfassen und abzuwehren, wobei die Vorrichtung (2) mit optischen Mitteln (92, 96) kommuniziert, um Vögel und Säugetiere zu erfassen, wobei die Vorrichtung durch Erfassen von Vögeln oder Säugetieren eine Kombination aus Basisreizen (18, 20, 22, 24) und aus veränderlichen Reizen ausgibt oder sendet, wobei die Vorrichtung Kommunikationsmittel (98) enthält, die durch die Erfassung von Vögeln oder Säugetieren in einem Gebäude aktiviert werden.

## Revendications

1. Appareil (2) destiné à éloigner la faune sauvage, l'appareil (2) comprenant des moyens pour détecter et enregistrer des animaux de la faune sauvage, l'appareil étant conçu avec des moyens (6, 8, 10, 12) pour exercer des stimuli, l'appareil (2) contenant des moyens pour exercer des stimuli variables en tant que variantes d'au moins un stimulus de base, l'appareil contenant au moins une mémoire (16), la mémoire (16) contenant différents stimuli de base (18, 20, 22, 24), la mémoire (16) contenant une pluralité de stimuli variables au sein des divers stimuli de base (18, 20, 22, 24), l'appareil (2) contenant des moyens pour sélectionner des stimuli de base (18, 20, 22, 24) et variables, **caractérisé en ce que** la sélection des stimuli de base (18, 20, 22, 24) et variables se produit en se fondant sur des enregistrements antérieurs de la faune sauvage et des enregistrements de stimuli appliqués, l'appareil (2) contenant des moyens (6, 8, 10, 12) pour émettre des stimuli sélectionnés.

2. Appareil selon la revendication 1, **caractérisé en ce que** l'appareil (2) sélectionne des stimuli en se basant sur l'heure effective, l'appareil (2) contenant un générateur aléatoire pour sélectionner des stimuli de base (18, 20, 22, 24) et des stimuli variables.

3. Appareil selon la revendication 1 ou 2, **caractérisé en ce que** l'appareil interagit avec des moyens optiques infrarouges (28, 30, 64, 66, 68) pour détecter la faune sauvage.

4. Appareil selon l'une des revendications 1 à 3, **caractérisé en ce que** l'appareil interagit avec des moyens (36, 38, 40, 42, 44, 46, 48, 50, 58, 60, 74, 76, 78) pour émettre et détecter au moins un faisceau de lumière destiné à détecter la faune sauvage.

5. Procédé pour prévenir des blessures sur la faune sauvage tel que spécifié dans les revendications 1 à 4, incluant le fait d'exercer des stimuli en fonction d'au moins un paramètre de commande, où les stimuli incluent au moins un stimuli choisi parmi les groupes suivants de stimuli de base : le son (6), la lumière (8), le mouvement (10), l'odeur (12), le procédé incluant la détection et l'enregistrement de la faune sauvage, le procédé sélectionnant au moins un stimulus de base (18, 20, 22, 24), le procédé sélectionnant ultérieurement au moins un stimulus variable au sein d'au moins un stimulus de base (18, 20, 22, 24), **caractérisé en ce que** le procédé concerne la sélection d'un stimulus de base et de stimuli variables en se basant sur des enregistrements antérieurs de la faune sauvage et de stimuli appliqués.

6. Utilisation d'un appareil tel que spécifié dans les revendications 1 à 4 et du procédé tel que spécifié dans la revendication 5, pour prévenir des blessures sur la faune sauvage, **caractérisée en ce qu'**une zone d'alimentation de faune sauvage (54) se présente le long d'une rangée de bois (52) où, sur un champ (56) disposé à l'arrière, des détecteurs (58, 60) sont utilisés pour donner des indications à la faune sauvage, où la détection de la faune sauvage occasionne une sélection et une émission d'une combinaison du stimuli de base (18, 20, 22, 24) et de stimuli variables.

7. Utilisation d'un appareil selon les revendications 1 à 4 et d'un procédé selon la revendication 5, pour prévenir des blessures sur la faune sauvage selon la revendication 6, **caractérisée en ce qu'**au moins un appareil (2) est disposé dans un boisement pour détecter la faune sauvage et émettre une combinaison du stimulus de base (18, 20, 22, 24) et de stimuli variables.

8. Utilisation d'un appareil tel que spécifié dans les revendications 1 à 4 et d'un procédé tel que spécifié dans la revendication 5, pour prévenir des blessures sur la faune sauvage selon la revendication 6 ou 7, **caractérisée en ce qu'**au moins un appareil (2) est disposé le long d'une route/un passage (72) dans un bois, où une détection de la faune sauvage se produit à l'aide de moyens (74, 76, 78) destinés à émettre au moins un faisceau de lumière, où les moyens (74, 76, 78) destinés à détecter des faisceaux de lumière communiquent avec au moins un appareil (2) pour exercer/émettre une combinaison de stimuli de base (18, 20, 22, 24) et de stimuli variables.

9. Utilisation d'un appareil tel que spécifié dans les revendications 1 à 4 et d'un procédé tel que spécifié dans la revendication 5, pour prévenir des blessures sur la faune sauvage selon l'une des revendications 6 à 8,
**caractérisée en ce que** l'appareil (2) est utilisé dans des bâtiments pour détecter et prévenir des oiseaux et des mammifères, l'appareil (2) communiquant avec des moyens optiques (92, 96) pour détecter des oiseaux et des mammifères, où l'appareil, en détectant les oiseaux ou mammifères exerçant ou transmettant une combinaison de stimuli de base (18, 20, 22, 24) et de stimuli variables, l'appareil contenant des moyens de communication (98) qui sont activés en détectant des oiseaux ou des mammifères dans un bâtiment.
